# EUROPEAN PATENT SPECIFICATION

(11) **EP 0 667 725 B1**
(45) Date of publication and mention of the grant of the patent: **22.10.2003**
(21) Application number: 95100342.5
(22) Date of filing: 12.01.1995
(51) Int. Cl.: H04Q 7/38, H04Q 7/28

(54) **Method for registrering direct mode mobile stations in a trunking communications system**
Registrierungsverfahren von mobilen Stationen im Direkt-Verfahren in einen Bündelfunksystem
Méthode d'enregistrement de mobiles en mode direct dans un système de communication radio-mobile

(30) Priority: 09.02.1994 GB 9402453
(43) Date of publication of application: 16.08.1995
(73) Proprietor: MOTOROLA LTD, Basingstoke, Hampshire RG22 4PD (GB)
(72) Inventor: Robinson, William Neil, Farnham, Surrey GU9 9HH (GB); Aitkenhead, Gary John, Basingstoke, Hampshire RG26 5UJ (GB); Baker, Paul Dominic, Fair Oak, Hampshire SO5 7JU (GB)
(74) Representative: Dunlop, Hugh Christopher

(56) References cited:
- EP-A- 0 480 505
- EP-A- 0 509 510
- WO-A-95/12956

## Description

### Field of the Invention

This invention relates in general to a communications system such as a trunked radio communications system, and more particularly to a method for registering a direct mode mobile station with the trunked radio communications system.

### Background to the Invention

Trunked radio communications systems are well known in the art. In trunked radio communications systems, a plurality of subscribers share a predetermined number of communications resources. The resources are assigned to subscribers, or mobile stations, by a system controller of the trunked radio system. The system controller may be a central control station or distributed logic at various control stations.

In a trunked communications system, each of the trunked mobile stations is specially equipped with control circuitry to enable requesting and receiving a communications resource and to enable operating on the communications resource assigned by the system controller. Typically, before a trunked mobile station is able to request a communications resource from the system controller, the mobile station must first have registered with the trunked radio system. Registration allows a mobile station to be identified to the system controller and thereby be located by the system controller when needed. Registration is also an important part of security of the trunked radio system. The system controller is able to deny access to a communications resource for a mobile station if the mobile station is not properly registered on the trunked radio system.

A mobile unit may communicate directly to other mobile units by operating in direct mode. In direct mode, the mobile units communicate over a fixed radio channel and there is no system controller allocating resources. Any direct mode mobile unit that has the capability to communicate over the fixed channel simply does so when it desires to transmit or receive. There is no registration process required for a direct mode mobile station to communicate with another direct mode mobile station.

U.S. Patent No. 4,553,262 provides a communications system that enables a radio unit operating in direct mode to communicate to a trunked radio system. However, there exists a need for a direct mode mobile station to be able to register with the system controller of a trunked radio communications system. Additionally, there exists a need for a method of registering a direct mode mobile station with a system controller of any communications system.

Published European Patent Application EP-A-0 509 510 describes two radio communication networks. A first network may be a portable telephone system. A second network may be an automobile telephone network. A portable telephone may be outside the service area of the first network, yet may still register with the first network via a radio unit that is in communication with the second network and a link between the two networks. The radio unit in the second network may be an automobile telephone, fitted with a communication adapter.

### Summary of the Invention

According to a first aspect of the present invention, there is provided a method for registering a direct mode mobile station with a system controller of a trunked radio system by an independent gateway transceiver. The method includes registering the mobile station with the system controller of the trunked radio system by the gateway transceiver.

In a preferred embodiment, the method includes transmitting a third party registration demand from the gateway transceiver to the system controller to demand registration of the mobile station.

### Brief Description of the Drawings

FIG. 1 shows a coverage area for a trunked radio communications system.
FIG. 2 shows a coverage area for a direct mode mobile station according to the present invention.
FIG. 3 shows a sequence of messages for registration of a mobile station according to the present invention.
FIG. 4 shows a direct mode mobile station originated termination sequence for the method of FIG. 3.
FIG. 5 shows a gateway transceiver originated termination sequence for the method of FIG. 3.
FIG. 6 shows a system controller originated termination sequence for the method of FIG. 3.

### Detailed Description of the Preferred Embodiment

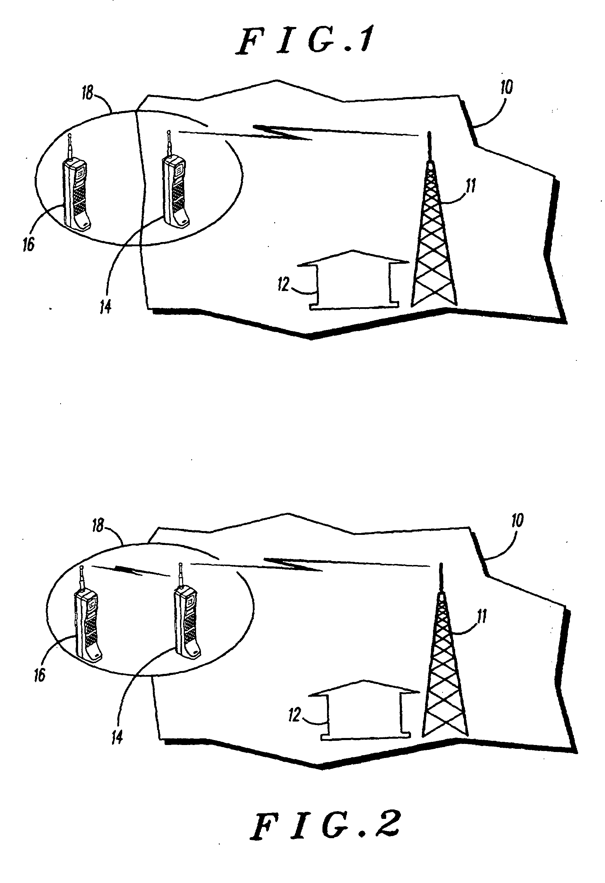

FIG. 1 shows a coverage area 10 for a trunked radio communications system including a base station 11 and a gateway transceiver 14 within the coverage area and a direct mode mobile 16 outside of the coverage area 10. A gateway transceiver is a radio unit that is able to operate both on the trunked radio communications system and in direct mode.

The base station of a trunked radio communications system includes a system controller 12. The system controller 12 controls the registration of mobile stations and the allocation of communications resources of the communications system. The trunked radio communication system may be of any type known in the art.

The direct mode mobile station 16 is a mobile station operating in a direct mode. The direct mode mobile station 16 is able to communicate directly to another mobile station or gateway transceiver over a fixed or single channel. The direct mode may be a selective mode of operation for a trunked mobile station whereby the mobile station may communicate directly with another mobile station without going through the system controller 12 of the trunked radio system. The coverage area 18 of a direct mode mobile unit 16 is usually much smaller than the coverage area of a trunked radio communications system 10.

FIG. 2 shows the direct mode mobile station communicating directly to a gateway transceiver 14 thereby communicating to the system controller 12 of the trunked radio communications system. The direct mode mobile station 16 communicates over a fixed radio channel to the gateway transceiver 14. The gateway transceiver 14 then communicates to the system controller 12 over a trunked radio channel. The direct mode mobile station 16 may register with the system controller 12 of the communications system via the gateway transceiver 14 using a third party registration scheme. The third party registration scheme will inform the system controller 12 that the direct mode mobile station 16 may be contacted by the gateway transceiver 14.

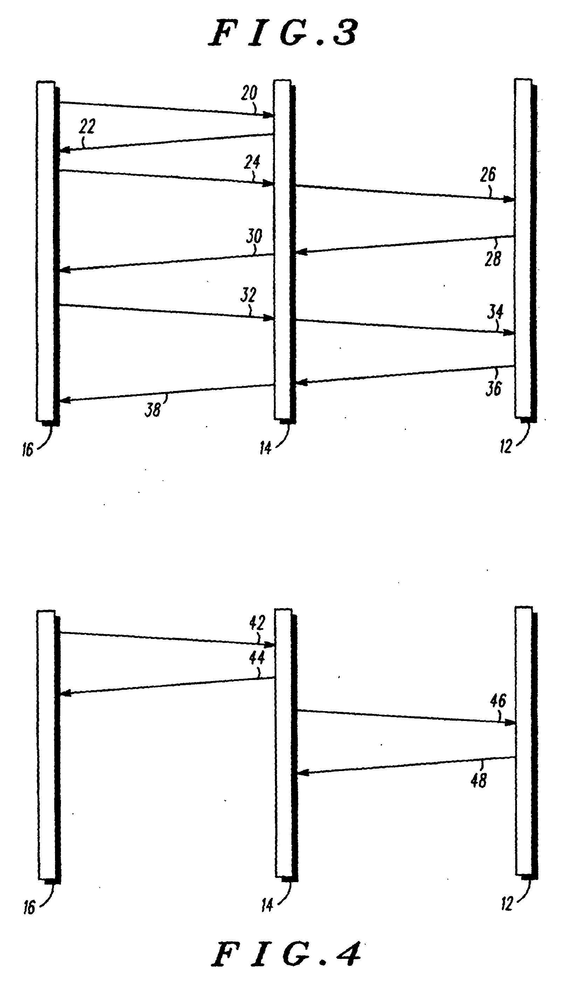

FIG. 3 shows a method of registering a direct mode mobile station with a system controller of a trunked radio communications system. The method is shown best as a sequence of steps flowing between a direct mode mobile station 16, a gateway transceiver 14, and a system controller 12.

In a preferred embodiment, the direct mode mobile station 16 transmits a gateway transceiver search message 20 to at least one gateway transceiver 14 in order to find an available gateway transceiver to register the mobile station with the system controller 12 of the trunked radio system. The gateway transceiver search message invites any capable gateway transceiver to act as a gateway transceiver for the direct mode mobile station 16. The gateway transceiver search message contains a message identification, an address of the direct mode mobile station 16, and, optionally, authentication information to authenticate the gateway transceiver 14 as a valid gateway transceiver. Alternatively to searching for any capable gateway transceiver, the mobile station 16 may search for a specific gateway transceiver by including the individual address of the desired gateway transceiver. The direct mode mobile station 16 may also search for any group of gateway transceivers by including a group address in the gateway transceiver search message.

The gateway transceiver 14 receives the gateway transceiver search message and responds to the mobile station 16 by transmitting a gateway transceiver acknowledgement message 22 to the mobile station 16. The gateway transceiver acknowledgement message indicates to the mobile station 16 that the gateway transceiver 14 is available to communicate to the system controller 12 of the trunked radio system for the mobile station 16. The gateway transceiver acknowledgement message contains a message identification, the address of the gateway transceiver 14, the address of the direct mode mobile station 16 and, optionally, the gateway transceiver authentication information. The gateway transceiver authentication information authenticates the gateway transceiver 14 as a proper gateway transceiver for the mobile station 16. Thus, a level of security may be imposed on the communications system.

In the case where the gateway transceiver 14 acts as a dedicated gateway transceiver for the mobile station 16, the information field that represents the address of the gateway transceiver 14 may be the same address as the mobile station 16.

When a mobile station 16 receives a gateway transceiver acknowledgement message from the gateway transceiver 14, with the correct authentication information, the mobile station 16 may decide whether to accept the gateway transceiver 14 as a via for communication with the trunked radio communications system. If the mobile station 16 is satisfied that the gateway transceiver 14 is a suitable gateway transceiver then the mobile station 16 transmits a gateway transceiver confirm message 24.

When the gateway transceiver 14 receives a gateway transceiver confirm message, the gateway transceiver 14 transmits a third party registration demand message 26 to the system controller 12. The third party registration demand message informs the system controller 12 that the mobile station 16 may only be accessed via the gateway transceiver 14 and therefore the performances that can be achieved by the mobile station 16 are not the same as if the mobile station 16 were in direct contact with the system controller 12. For example, the call set up time to the mobile station 16 must be extended because the information exchange must travel across a direct mode air interface in addition to a trunked air interface. Also the end to end delay of any trunked mode service involving the mobile station 16 in combination with the gateway transceiver 14 will be longer than normal. In addition, the capability of the gateway transceiver 14 may restrict the communication capability of the mobile station 16, such as a limitation to the maximum data throughput to or from the mobile station 16 via the gateway transceiver 14, or the loss of duplex capability, or the loss of an entire service such as packet data which may not be supported by direct mode. In such circumstances, it is imperative that the system controller 12 is aware of the capability of the mobile station 16 in combination with the gateway transceiver 14.

Furthermore, it is important for the system controller 12 to know that there is an association between the gateway transceiver 14 and the mobile station 16 because if the gateway transceiver 14 is supporting a communication with the trunked radio system for the mobile station 16 then the gateway transceiver 14 may not manage to support a trunked mode call for itself. Additionally, the system controller 12 also must be made aware when the gateway transceiver 14 has a reduced capability for exchange of control information.

Upon receipt of a third party registration demand, the base station, if necessary, authenticates both the gateway transceiver 14 and the mobile station 16 by issuing a third party authentication demand message 28. The gateway transceiver 14 performs it own authentication duties and passes authentication request 30 to the mobile station 16. The mobile station 16 performs its authentication duties and passes a reply 32 to the gateway transceiver 14. The gateway transceiver 14 finally passes a combined authentication response 34 to the system controller 12 using a third party authentication reply message. Thus, every gateway transceiver 14 and mobile station 16 operating via a gateway transceiver 14 on the system may be authenticated.

Upon completion of the authentication process, the system controller 12 transmits a third party registration reply message 36 to the gateway transceiver 14 indicating whether or not registration was successful. The gateway transceiver 14 then indicates the registration status by transmitting a gateway transceiver registration message 38.

Having successfully completed the gateway transceiver and mobile station message exchange sequence as described above, the mobile station 16 is effectively registered with the system controller 12 of the trunked radio communications system. The gateway transceiver 14 is also now empowered to pass information from the mobile station 16 to the system controller 12 and from the system controller 12 to the mobile station 16 using the address of the mobile station 16 when communicating on behalf of the mobile station 16.

The gateway transceiver and mobile station arrangement may be terminated by any of the three equipments, system controller 12, gateway transceiver 14 or mobile station 16. Once the gateway transceiver and mobile station arrangement has been dissolved, the gateway transceiver 14 is no longer empowered to act on messages addressed to the mobile station 16.

FIG. 4 shows a termination sequence for a direct mode mobile originated termination. When the direct mobile station 16 elects to terminate its gateway transceiver arrangement the direct mode mobile station 16 transmits a terminate message 42 to the gateway transceiver 14. The gateway transceiver 14 then transmits a terminate acknowledge message 44 to the direct mode mobile station 16. The gateway transceiver 14 then must transmit a third party de-register demand 46 to the system controller 12 to instruct the system controller 12 to de-register the direct mode mobile station 16. The system controller 12 transmits a third party de-register reply 48 to the gateway transceiver 14 and the mobile station 16 is thereafter no longer registered with the system controller 12. If the mobile station 16 subsequently wishes to communicate on the trunking system, the mobile station 16 must re-register with the system controller 12.

It is interesting to note that when the mobile station 16 terminates the gateway transceiver and mobile unit arrangement, it may be because the mobile station 16 is able to communicate directly with the system controller 12 and can register directly with the system controller 12 using the normal registration process.

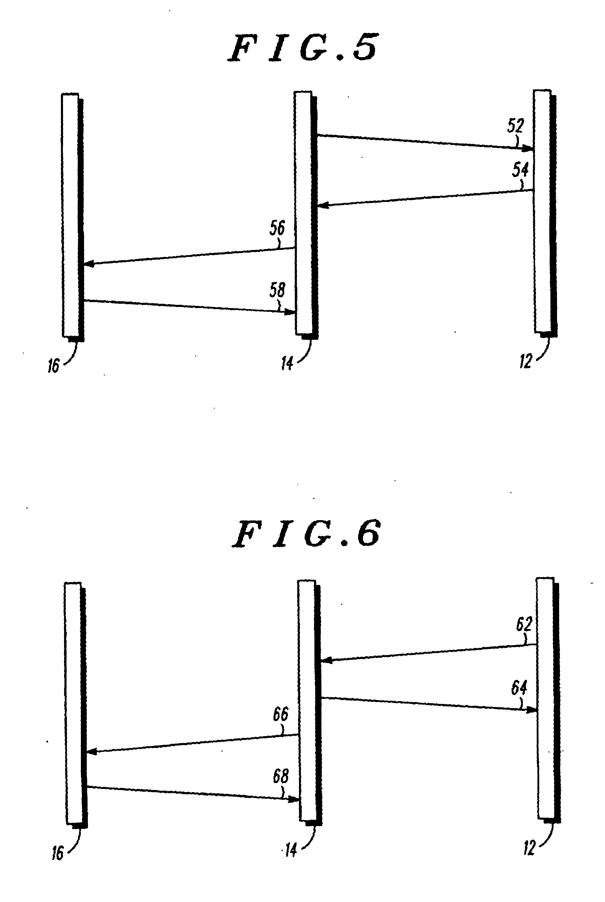

FIG. 5 shows a termination sequence for a gateway transceiver 14 originated termination. The gateway transceiver 14 transmits a third party de-registration demand 52 to the system controller 12. The system controller 12 then transmits a third party de-registration reply 54 to the gateway transceiver 14 and de-registers the direct mode mobile station 16 from the system. The gateway transceiver 14 then transmits a detach message 56 to the mobile station 16 to inform the mobile station of the de-registration. The mobile station 16 then transmits a detach acknowledge message 58 to the gateway transceiver 14 acknowledging that the mobile station 16 and gateway transceiver arrangement has been terminated.

FIG. 6 shows a termination sequence for a system controller 12 originated termination. The system controller 12 transmits a third party de-registration demand 62 to the gateway transceiver 14 to inform the gateway transceiver 14 that the system controller 12 is de-registering the direct mobile station 16 from the trunking system. The gateway transceiver 14 replies with a third party de-registration reply 64 to the system controller 12 acknowledging the de-registration of the direct mode mobile station 16. The gateway transceiver 14 then transmits a detach message 66 to the mobile station 16 informing the mobile station 16 that it is no longer registered on the system. The mobile station 16 replies with a detach acknowledgement message 68 to the gateway transceiver 14 acknowledging that the mobile station and gateway transceiver arrangement has been terminated.

The general scheme may in principle be used to chain more than one gateway transceiver. If this were to be attempted, then the achievable temporal quality of service performances may be adversely affected because of the extra delay involved.

The method of the present invention may be used to extend the coverage range of a system controller 12 for a trunked radio communications system. For example, if a trunked mobile station is outside of the coverage area of the trunked radio communications system the mobile station may communicate to the trunked radio communications system by first communicating using direct mode to a gateway transceiver within the coverage area and having the gateway transceiver communicate to the trunked radio communications system. The gateway transceiver must be in close proximity to the direct mode mobile and also in the coverage area of the trunked radio communications system. The gateway transceiver 14 communicates to the trunked radio communications system for the direct mode mobile station 16 whereby the direct mode mobile station 16 may register with the system controller 12 of the trunked radio communications system. Thus, the present invention provides a method for registering a direct mode mobile station with a trunked radio system by an independent gateway transceiver using a third party registration scheme.

## Claims

1. A method for registering a direct mode mobile station (16) with a system controller (12) of a trunked radio system by an independent gateway transceiver (14) comprising the step of:
selecting (20,22,24) an available gateway transceiver by the direct mode mobile station; and
registering (26,28,30,32,34,36,38) the mobile station with the system controller of the trunked radio system by the gateway transceiver using a third party registration scheme.

2. The method of claim 1 wherein the step of selecting comprises the steps of:
searching (20) for an available gateway transceiver (14) to register the mobile station (16) with the system controller (12) of the trunked radio system; and
acknowledging (22) from an available gateway transceiver to the mobile station that the gateway transceiver is available to register the direct mode mobile station with the system controller of the trunked radio system.

3. The method of claim 2 wherein the step of searching for an available gateway transceiver comprises the step of:
transmitting (20) a gateway transceiver search message from the mobile station (16) to at least one gateway transceiver (14) in an attempt to find an available gateway transceiver to register the direct mode mobile station with the system controller (12) of the trunked radio system.

4. The method of claim 3 wherein the step of transmitting the gateway transceiver search message (20) includes transmitting an address of the mobile and an address of the gateway transceiver.

5. The method of claim 2 wherein the step of acknowledging (22) comprises the step of:
transmitting a gateway transceiver acknowledgement message from a gateway transceiver; and
receiving a gateway transceiver acknowledgement message at the mobile station from the gateway transceiver indicating status of the gateway transceiver.

6. The method of claim 5 wherein the step of acknowledging (22) further comprises the step of:
transmitting a confirmation message (24) from the mobile station to the gateway transceiver (14) to indicate to the gateway transceiver to transmit a registration message (26) to the system controller.

7. The method of any preceding claim wherein the step of registering the mobile station with the system controller of the trunked radio system by the gateway transceiver comprises the steps of:
transmitting a third party registration demand (26) from the gateway transceiver (14) to the system controller (12) to demand registration of the mobile station (16);
transmitting a registration reply (36) from the system controller to the gateway transceiver; and
transmitting a registration status (38) by the gateway transceiver to the mobile station thereby confirming registration of the mobile station with the system controller of the trunked radio system by the gateway transceiver.

8. The method of any preceding claim wherein the step of registering the mobile station with the system controller of the trunked radio system by the gateway transceiver comprises the step of:
authenticating (28,30,32,34) the mobile station by the system controller to verify if mobile station is a valid user.

9. The method of any preceding claim further comprising the step of terminating (52,54,56,58) registration of the mobile station initiated by the gateway transceiver.

10. The method of claim 9 wherein the step of terminating registration of the mobile station initiated by the gateway transceiver comprises the steps of:
transmitting a third party de-registration demand (52) by the gateway transceiver to the system controller;
receiving a third party de-registration reply (54) from the system controller at the gateway transceiver;
transmitting a gateway transceiver detach message (56) from the gateway transceiver to the mobile station; and
receiving a detach acknowledgement (58) by the mobile station at the gateway transceiver.

11. The method of any one of claims 1 to 8 further comprising the step of terminating (42,44,46,48) the registration of the mobile station initiated by the mobile station.

12. The method of claim 11 wherein the step of terminating registration of the mobile station initiated by the mobile station comprises the steps of:
receiving a terminate message (42) at the gateway transceiver from the mobile station;
transmitting a termination acknowledgement message (44) from the gateway transceiver to the mobile station;
transmitting a third party de-registration demand (46) from the gateway transceiver to the system controller; and
transmitting a third party de-registration reply (48) from the system controller to the gateway transceiver.

13. The method of claim 1 to 8 further comprising the step of terminating (62,64,66,68) the registration of the mobile station initiated by the system controller.

14. The method of claim 13 wherein the step of terminating the registration of the mobile station initiated by the system controller comprises the steps of:
receiving a third party de-registration demand (62) from the system controller at the gateway transceiver;
transmitting a third party de-registration reply message (64) from the gateway transceiver to the system controller;
transmitting a gateway transceiver detach message (66) from the gateway transceiver to the mobile station; and
receiving a detach acknowledge (68) at the gateway transceiver from the mobile station.

## Patentansprüche

1. Verfahren zum Registrieren einer Mobilstation (16) im Direktmodus bei einem Systemcontroller (12) eines Bündelfunksystems, durch einen unabhängigen Gateway-Transceiver (14), das die Schritte umfasst:
Auswählen (20, 22, 24) eines verfügbaren Gateway-Transceivers durch die Mobilstation im Direktmodus; und
Registrieren (26, 28, 30, 32, 34, 36, 38) der Mobilstation bei dem Systemcontroller des Bündelfunksystems durch den Gateway-Transceiver unter Verwendung eines Dritte-Partei-Registrierungsschemas.

2. Verfahren nach Anspruch 1, wobei der Schritt des Auswählens die Schritte umfasst:
Suchen (20) nach einem verfügbaren Gateway-Transceiver (14), zum Registrieren der Mobilstation (16) bei dem Systemcontroller (12) des Bündelfunksystems; und
Bestätigen (22), von einem verfügbaren Gateway-Transceiver zu der Mobilstation, dass der Gateway-Transceiver zum Registrieren der Mobilstation im Direktmodus bei dem Systemcontroller des Bündelfunksystems verfügbar ist.

3. Verfahren nach Anspruch 2, wobei der Schritt des Suchens nach einem verfügbaren Gateway-Transceiver den Schritt umfasst:
Senden (20) einer Gateway-Transceiver-Suchnachricht von der Mobilstation (16) zu mindestens einem Gateway-Transceiver (14), in dem Versuch, einen zum Registrieren der Mobilstation im Direktmodus bei dem Systemcontroller (12) des Bündelfunksystems verfügbaren Gateway-Transceiver zu finden.

4. Verfahren nach Anspruch 3, wobei der Schritt des Sendens der Gateway-Transceiver-Suchnachricht (20) das Senden einer Adresse der Mobilstation und einer Adresse des Gateway-Transceivers einschließt.

5. Verfahren nach Anspruch 2, wobei der Schritt des Bestätigens (22) den Schritt umfasst:
Senden einer Gateway-Transceiver-Bestätigungsnachricht von einem Gateway-Transceiver; und
Empfangen einer Gateway-Transceiver-Bestätigungsnachricht von dem Gateway-Transceiver an der Mobilstation, die den Zustand des Gateway-Transceivers anzeigt.

6. Verfahren nach Anspruch 5, wobei der Schritt des Bestätigens (22) weiterhin den Schritt umfasst:
Senden einer Bestätigungsnachricht (24) von der Mobilstation zu dem Gateway-Transceiver (14), um dem Gateway-Transceiver anzuzeigen, eine Registrierungsnachricht (26) zu dem Systemcontroller zu senden.

7. Verfahren nach einem der vorhergehenden Ansprüche, wobei der Schritt des Registrierens der Mobilstation bei dem Systemcontroller des Bündelfunksystems durch den Gateway-Transceiver die Schritte umfasst:
Senden einer Dritte-Partei-Registrierungsanforderung (26) von dem Gateway-Transceiver (14) zu dem Systemcontroller (12), um die Registrierung der Mobilstation (16) anzufordern;
Senden einer Registrierungsantwort (36) von dem Systemcontroller zu dem Gateway-Transceiver; und
Senden eines Registrierungsstatus (38) durch den Gateway-Transceiver zu der Mobilstation, wodurch die Registrierung der Mobilstation bei dem Systemcontroller des Bündelfunksystems durch den Gateway-Transceiver bestätigt wird.

8. Verfahren nach einem der vorhergehenden Ansprüche, wobei der Schritt des Registrierens der Mobilstation bei dem Systemcontroller des Bündelfunksystems durch den Gateway-Transceiver den Schritt umfasst:
Authentisieren (28, 30, 32, 34) der Mobilstation durch den Systemcontroller, um zu verifizieren, ob die Mobilstation ein gültiger Nutzer ist.

9. Verfahren nach einem der vorhergehenden Ansprüche, das weiterhin den Schritt des Beendens (52, 54, 56, 58) der Registrierung der Mobilstation, ausgelöst durch den Gateway-Transceiver, umfasst.

10. Verfahren nach Anspruch 9, wobei der Schritt des Beendens der Registrierung der Mobilstation, ausgelöst durch den Gateway-Transceiver, die Schritte umfasst:
Senden einer Dritte-Partei-Deregistrierungsanforderung (52) durch den Gateway-Transceiver zu dem Systemcontroller;
Empfangen einer Dritte-Partei-Deregistrierungsantwort (54) von dem Systemcontroller an dem Gateway-Transceiver;
Senden einer Gateway-Transceiver-Ablösungsnachricht (56) von dem Gateway-Transceiver zu der Mobilstation; und
Empfangen einer Ablösungsbestätigung (58) von der Mobilstation an dem Gateway-Transceiver.

11. Verfahren nach einem der Ansprüche 1 bis 8, das weiterhin den Schritt des Beendens (42, 44, 46, 48) der Registrierung der Mobilstation, ausgelöst durch die Mobilstation, umfasst.

12. Verfahren nach Anspruch 11, wobei der Schritt des Beendens der Registrierung der Mobilstation, ausgelöst durch die Mobilstation, die Schritte umfasst:
Empfangen einer Beendigungsnachricht (42) an dem Gateway-Transceiver von der Mobilstation;
Senden einer Beendigungsbestätigungsnachricht (44) von dem Gateway-Transceiver zu der Mobilstation;
Senden einer Dritte-Partei-Deregistrierungsanforderung (46) von dem Gateway-Transceiver zu dem Systemcontroller; und
Senden einer Dritte-Partei-Deregistrierungsantwort (48) von dem Systemcontroller zu dem Gateway-Transceiver.

13. Verfahren nach Anspruch 1 bis 8, das weiterhin den Schritt des Beendens (62, 64, 66, 68) der Registrierung der Mobilstation, ausgelöst durch den Systemcontroller, umfasst.

14. Verfahren nach Anspruch 13, wobei der Schritt des Beendens der Registrierung der Mobilstation, ausgelöst durch den Systemcontroller, die Schritte umfasst:
Empfangen einer Dritte-Partei-Deregistrierungsanforderung (62) von dem Systemcontroller an dem Gateway-Transceiver;
Senden einer Dritte-Partei-Deregistrierungsantwortnachricht (64) von dem Gateway-Transceiver zu dem Systemcontroller;
Senden einer Gateway-Transceiver-Ablösungsnachricht (66) von dem Gateway-Transceiver zu der Mobilstation; und
Empfangen einer Ablösungsbestätigung (68) an dem Gateway-Transceiver von der Mobilstation.

## Revendications

1. Procédé pour enregistrer une station mobile en mode direct (16) avec un contrôleur système (12) d'un système radio à artères au moyen d'un émetteur-récepteur de passerelle indépendant (14), comprenant les étapes de :
sélection (20, 22, 24) d'un émetteur-récepteur de passerelle disponible au moyen de la station mobile en mode direct ; et
enregistrement (26, 28, 30, 32, 34, 36, 38) de la station mobile avec le contrôleur système du système radio à artères au moyen de l'émetteur-récepteur de passerelle en utilisant un schéma d'enregistrement de tierce partie.

2. Procédé selon la revendication 1, dans lequel l'étape de sélection comprend les étapes de :
recherche (20) d'un émetteur-récepteur de passerelle disponible (14) pour enregistrer la station mobile (16) avec le contrôleur système (12) du système radio à artères ; et
envoi d'un accusé de réception (22) depuis un émetteur-récepteur de passerelle disponible sur la station mobile consistant en ce que l'émetteur-récepteur de passerelle est disponible pour enregistrer la station mobile en mode direct avec le contrôleur système du système radio à artères.

3. Procédé selon la revendication 2, dans lequel l'étape de recherche d'un émetteur-récepteur de passerelle disponible comprend l'étape de :
transmission (20) d'un message de recherche d'émetteur-récepteur de passerelle depuis la station mobile (16) sur au moins un émetteur-récepteur de passerelle (14) lors d'une tentative pour trouver un émetteur-récepteur de passerelle disponible pour enregistrer la station mobile en mode direct avec le contrôleur système (12) du système radio à artères.

4. Procédé selon la revendication 3, dans lequel l'étape de transmission du message de recherche d'émetteur-récepteur de passerelle (20) inclut la transmission d'une adresse de la station mobile et d'une adresse de l'émetteur-récepteur de passerelle.

5. Procédé selon la revendication 2, dans lequel l'étape d'envoi d'accusé de réception (22) comprend les étapes de :
transmission d'un message d'accusé de réception d'émetteur-récepteur de passerelle depuis un émetteur-récepteur de passerelle ; et
réception d'un message d'accusé de réception d'émetteur-récepteur de passerelle au niveau de la station mobile depuis l'émetteur-récepteur de passerelle indiquant un état de l'émetteur-récepteur de passerelle.

6. Procédé selon la revendication 5, dans lequel l'étape d'envoi d'accusé de réception (22) comprend en outre l'étape de :
transmission d'un message de confirmation (24) depuis la station mobile sur l'émetteur-récepteur de passerelle (14) afin d'indiquer à l'émetteur-récepteur de passerelle de transmettre un message d'enregistrement (26) au contrôleur système.

7. Procédé selon l'une quelconque des revendications précédentes, dans lequel l'étape d'enregistrement de la station mobile avec le contrôleur système du système radio à artères au moyen de l'émetteur-récepteur de passerelle comprend les étapes de :
transmission d'une demande d'enregistrement de tierce partie (26) depuis l'émetteur-récepteur de passerelle (14) sur le contrôleur système (12) pour demander l'enregistrement de la station mobile (16) ;
transmission d'une réponse d'enregistrement (36) depuis le contrôleur système sur l'émetteur-récepteur de passerelle ; et
transmission d'un état d'enregistrement (38) au moyen de l'émetteur-récepteur de passerelle sur la station mobile, d'où ainsi la confirmation de l'enregistrement de la station mobile avec le contrôleur système du système radio à artères au moyen de l'émetteur-récepteur de passerelle.

8. Procédé selon l'une quelconque des revendications précédentes, dans lequel l'étape d'enregistrement de la station mobile avec le contrôleur système du système radio à artères au moyen de l'émetteur-récepteur de passerelle comprend l'étape de :
authentification (28, 30, 32, 34) de la station mobile au moyen du contrôleur système afin de vérifier si une station mobile est un utilisateur valide.

9. Procédé selon l'une quelconque des revendications précédentes, comprenant en outre l'étape d'achèvement (52, 54, 56, 58) de l'enregistrement de la station mobile comme initié par l'émetteur-récepteur de passerelle.

10. Procédé selon la revendication 9, dans lequel l'étape d'achèvement de l'enregistrement de la station mobile comme initié par l'émetteur-récepteur de passerelle comprend les étapes de :
transmission d'une demande de dé-enregistrement de tierce partie (52) au moyen de l'émetteur-récepteur de passerelle sur le contrôleur système ;
réception d'une réponse de dé-enregistrement de tierce partie (54) en provenance du contrôleur système au niveau de l'émetteur-récepteur de passerelie ;
transmission d'un message de détachement d'émetteur-récepteur de passerelle (56) depuis l'émetteur-récepteur de passerelle sur la station mobile ; et
réception d'un accusé de réception de détachement (58) par la station mobile au niveau de l'émetteur-récepteur de passerelle.

11. Procédé selon l'une quelconque des revendications 1 à 8, comprenant en outre l'étape d'achèvement (42, 44, 46, 48) de l'enregistrement de la station mobile comme initié par la station mobile.

12. Procédé selon la revendication 11, dans lequel l'étape d'achèvement de l'enregistrement de la station mobile comme initié par la station mobile comprend les étapes de :
réception d'un message d'achèvement (42) au niveau de l'émetteur-récepteur de passerelle depuis la station mobile ;
émission d'un message d'accusé de réception d'achèvement (44) depuis l'émetteur-récepteur de passerelle sur la station mobile ;
émission d'une demande de dé-enregistrement de tierce partie (46) depuis l'émetteur-récepteur de passerelle sur le contrôleur système ; et
émission d'une réponse de dé-enregistrement de tierce partie (48) depuis le contrôleur système sur l'émetteur récepteur de passerelle.

13. Procédé selon l'une quelconque des revendications 1 à 8, comprenant en outre l'étape d'achèvement (62, 64, 66, 68) de l'enregistrement de la station mobile comme initié par le contrôleur système.

14. Procédé selon la revendication 13, dans lequel l'étape d'achèvement de l'enregistrement de la station mobile comme initié par le contrôleur système comprend les étapes de :
réception d'une demande de dé-enregistrement de tierce partie (62) depuis le contrôleur système au niveau de l'émetteur récepteur de passerelle ;
émission d'un message de réponse de dé-enregistrement de tierce partie (64) depuis l'émetteur-récepteur de passerelle sur le contrôleur système ;
émission d'un message de détachement d'émetteur-récepteur de passerelle (66) depuis l'émetteur-récepteur de passerelle sur la station mobile ; et
réception d'un accusé de réception de détachement (68) au niveau de l'émetteur-récepteur de passerelle depuis la station mobile.
